# FASCICULE DE BREVET EUROPEEN

(11) **EP 2 111 300 B1**
(45) Date de publication et mention de la délivrance du brevet: **30.10.2013**
(21) Numéro de dépôt: 08762082.9
(22) Date de dépôt: 13.02.2008
(51) Int. Cl.: B01L 9/06

(54) **PLATEAU DE RECEPTION D'UNE PLURALITE DE FLACONS**
TABLETT ZUM TRAGEN MEHRERER FLASCHEN
TRAY FOR CARRYING A PLURALITY OF BOTTLES

(30) Priorité: 16.02.2007 FR 0753311
(43) Date de publication de la demande: 28.10.2009
(73) Titulaire: NOVACYT, 78140 Velizy Villacoublay (FR)
(72) Inventeur: PELTIER, Eric, F-92140 Clamart (FR)
(74) Mandataire: Domenego, Bertrand
(86) Numéro de dépôt international: PCT/FR2008/050232
(87) Numéro de publication internationale: WO 2008/104710

(56) Documents cités:
- WO-A-02/082095
- JP-A- 9 015 246
- US-A- 3 993 452
- US-A- 5 112 574
- US-A- 5 651 941
- US-A- 5 941 366

## Description

L'invention concerne un plateau de réception d'au moins un flacon, notamment dans le domaine de la biologie médicale, ainsi qu'un flacon adapté pour coopérer avec ledit plateau.

Il est connu de disposer une pluralité de flacons sur un plateau et d'insérer celui-ci dans un automate pour effectuer un remplissage ou un prélèvement du contenu de ces flacons. Les flacons sont retenus sur le plateau qui circule sous l'automate ou au-dessus duquel circule un automate comprenant des moyens de remplissage ou de prélèvement.

De tels automates sont plus particulièrement utilisés dans le domaine de la biologie et plus particulièrement de la biologie médicale. Un positionnement précis des flacons doit être garanti pour que les moyens de remplissage ou de prélèvement de l'automate se trouvent bien en regard d'un flacon lors des ces opérations. De plus, les flacons doivent être fermement maintenus sur le plateau afin d'éviter que ceux-ci ne se déplacent et faussent leur position ou qu'ils ne se renversent.

Ce positionnement et ce maintien sont plus particulièrement importants pour certains types de flacons. En effet, dans le domaine de la préparation de la biologie médicale, on connaît des flacons fermés par un couvercle qui présente une portion perçable et auto-cicatrisante de passage d'une pipette d'aspiration prévue sur l'automate. Un tel flacon est par exemple décrit dans le document WO-2006/058989. Pour un tel flacon, on doit éviter que le passage de la pipette au travers de la portion perçable ne provoque un déplacement du flacon sur le plateau et plus particulièrement que la pipette ne soulève le flacon lorsque celle-ci est retirée.

Sur certains flacons, on prévoit également des moyens d'identification du flacon lisibles à distance, par exemple au moyen d'une caméra, d'un capteur CCD, etc. Les moyens d'identification, tels qu'un code barre, de tous les flacons doivent alors être orientés selon une même direction pour permettre la lecture. Un positionnement rigoureux des flacons sur le plateau est donc primordial.

On estime qu'un positionnement des flacons au dixième de millimètre près selon les directions longitudinale et transversale du plateau est nécessaire pour un bon fonctionnement de l'automate.

L'invention vise à atteindre cet objectif en proposant un plateau de réception de flacons et un flacon garantissant un positionnement exact des flacons selon les directions longitudinale et transversale du plateau et un maintien des flacons selon ces directions et selon une direction d'élévation.

A cet effet et selon un premier aspect, l'invention concerne un plateau de réception d'au moins un flacon devant être positionné et maintenu de façon précise sur ledit plateau, ledit plateau comprenant un support sur lequel le flacon est destiné à être posé, au moins deux rails s'étendant sensiblement parallèlement l'un par rapport à l'autre sur le support, lesdits rails comprenant au moins un épaulement s'étendant au-dessus du support vers l'autre rail de sorte qu'un bord inférieur du flacon peut s'engager et être bloqué dans lesdits rails selon une direction longitudinale ou transversale et selon une direction d'élévation, chaque rail comprenant au moins une empreinte, lesdites empreintes étant disposées l'une en regard de l'autre, chaque empreinte étant agencée pour recevoir un moyen de blocage prévu sur le flacon de sorte que le flacon peut être bloqué dans les rails selon une direction longitudinale ou transversale.

Selon d'autres caractéristiques du plateau :
- il comprend une pluralité de rails associés les uns aux autres de sorte à former un peigne, lesdits rails formant une pluralité de rangées aptes à recevoir une pluralité de flacons,
- il comprend deux rails d'extrémité comprenant chacun un épaulement s'étendant vers l'autre rail d'extrémité et une pluralité de rails centraux comprenant chacun deux épaulements s'étendant respectivement vers l'un et l'autre rails d'extrémité,
- chaque rail comprend une pluralité d'empreintes réparties le long dudit rail de sorte qu'une pluralité de flacons peut être reçue dans une rangée formée par deux rails.

Selon un deuxième aspect, l'invention concerne un flacon destiné à être utilisé avec un plateau de réception tel que décrit ci-dessus, ledit flacon comprenant un corps à partir duquel s'étend un bord inférieur formant un moyen de blocage entre deux rails du plateau selon une direction longitudinale ou transversale et selon une direction d'élévation, ledit flacon comprenant en outre des moyens de blocage disposés de part et d'autre du corps et saillants de celui-ci, lesdits moyens étant destinés à s'engager dans les empreintes des rails du plateau de sorte à bloquer le flacon selon une direction longitudinale ou transversale.

Selon d'autres caractéristiques du flacon :
- les moyens de blocage comprennent une saillie disposée sur une languette prévue dans la partie inférieure du corps, ladite languette étant sensiblement élastique de sorte à obtenir un effet ressort permettant à la saillie de s'engager dans une empreinte lorsqu'elles sont en regard l'une de l'autre,
- le corps présente un allègement de matière autour de la languette,
- le flacon comprend un couvercle, le corps comprenant à sa partie supérieure des moyens de réception du couvercle, lesdits moyens de réception comprenant au moins un élément de positionnement du couvercle de sorte à orienter celui-ci d'une manière prédéfinie,
- les moyens de réception sont formés par un filetage sur la partie supérieure du corps, l'élément de positionnement étant formé par une butée saillant du filetage, le couvercle présentant des moyens de vissage complémentaires du filetage et une contre-butée contre laquelle prend appui la butée lorsque le couvercle est complètement vissé sur le corps,
- le couvercle porte un marquage visuel, ledit marquage étant orienté selon une direction précise et invariable lorsque le couvercle est fixé sur le corps.

D'autres aspects et avantages de l'invention apparaîtront au cours de la description qui suit, donnée à titre d'exemple et faite en référence aux annexés sur lesquels :
- la Fig. 1 est une vue en perspective d'un automate utilisé avec un plateau de réception portant des flacons selon l'invention.
- la Fig. 2 est une vue schématique de dessus d'un plateau de réception selon l'invention, des flacons étant représentés en pointillé,
- la Fig. 3 est une vue schématique en coupe selon l'axe II-II de la figure 1,
- la Fig. 4 est une vue schématique de côté d'un flacon selon l'invention, le couvercle étant écarté dudit flacon.

Dans la description, on définit le terme « longitudinal » selon une direction parallèle au plus grand côté du plateau de réception et le terme « transversal » selon une direction parallèle au plus petit côté du plateau. Le terme « élévation » est défini selon une direction perpendiculaire au plan formé par les directions longitudinale et transversale.

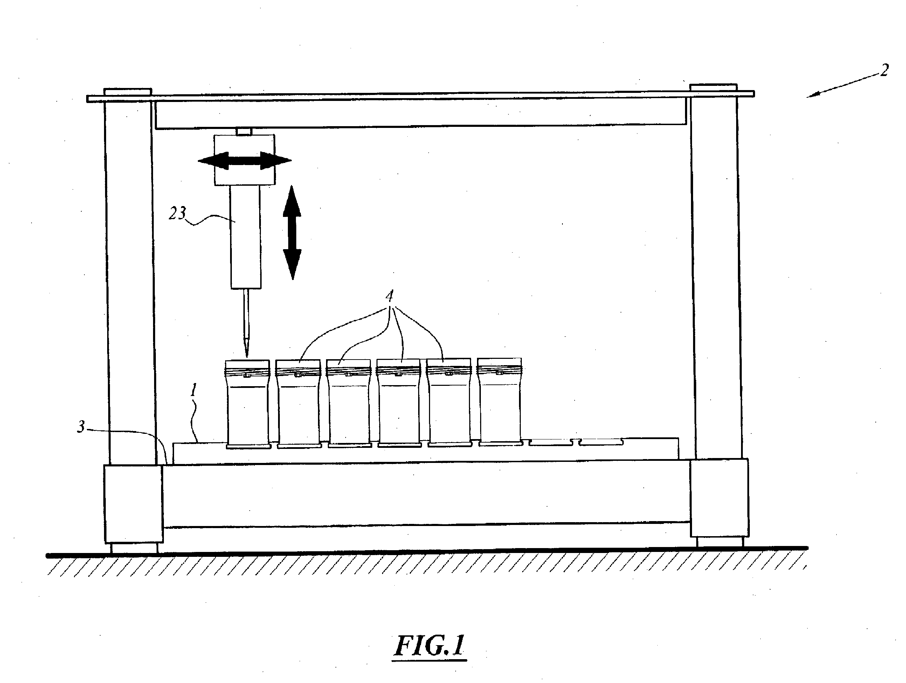

Le plateau de réception 1 est destiné à être utilisé avec un automate 2 tel que celui représenté sur la Fig. 1. L'automate 2 comprend un support 3 sur lequel est disposé le plateau 1 portant des flacons 4 et au dessus duquel s'étend des moyens de remplissage ou de prélèvement 23. Ces moyens 23 sont mobiles de sorte à passer au-dessus de chaque flacon 4 pour effectuer un prélèvement ou un remplissage comme représenté par les flèches de la Fig. 1. L'automate 2 est classique pour ce type d'application et n'est pas décrit plus en détail.

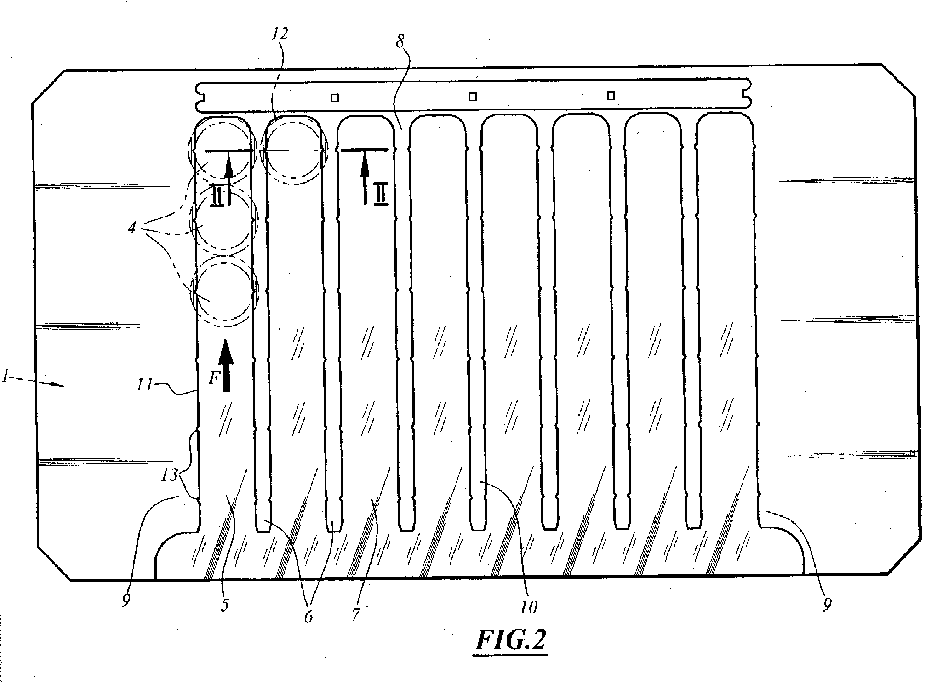

Le plateau 1 comprend un support 5 sur lequel les flacons 4 sont disposés entre des rails 6. Les rails 6 s'étendent sur le support 5 parallèlement les uns par rapport aux autres de sorte à former des rangées dans lesquelles les flacons peuvent être introduits. Selon la réalisation représentée sur les figures, les rails 6 s'étendent selon une direction transversale. Selon une variante de réalisation, ces rails 6 peuvent s'étendre selon une direction longitudinale. Les rails 6 forment une ouverture 7 à une de leur extrémité de sorte à permettre l'insertion de flacons 4 entre eux, comme représenté par la flèche F sur la Fig. 2. Les rails sont reliés entre eux à l'autre de leur extrémité de sorte que l'ensemble des rails 6 forme un peigne 8, comme représenté sur la Fig. 2.

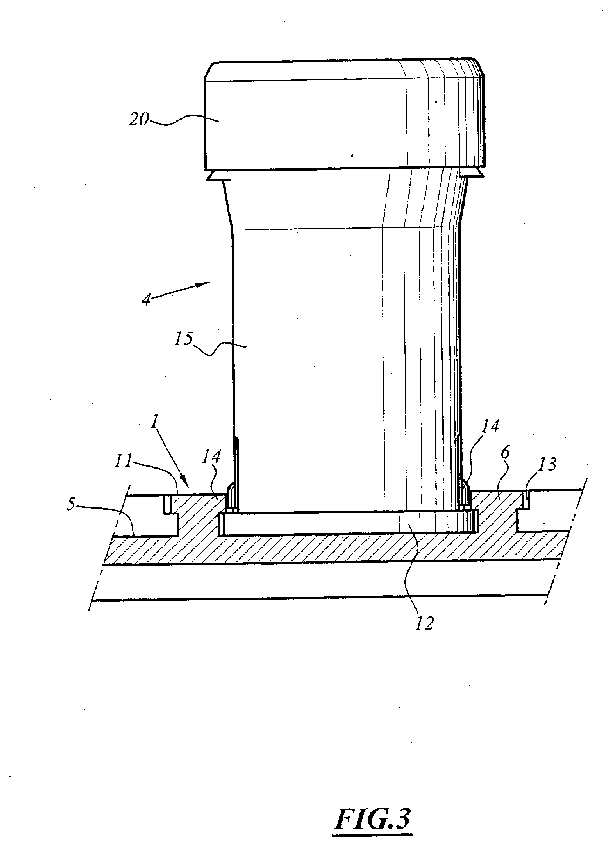

Le peigne 8 comprend deux rails d'extrémité 9 de part et d'autre du support 5 et une pluralité de rails centraux 10 disposés entre ces rails d'extrémité 9. Les rails d'extrémité 9 sont chacun pourvus d'un épaulement 11 s'étendant au dessus du support vers l'autre rail d'extrémité. Les rails centraux 10 sont chacun pourvus de deux épaulements 11 s'étendant au dessus du support 5 respectivement vers l'un et l'autre rails d'extrémité, comme représenté sur la Fig. 3. Un bord inférieur 12 du flacon 4 peut ainsi être engagé entre les rails et sous les épaulements 11 de sorte à être bloqués selon la direction d'élévation et selon la direction longitudinale ou transversale.

Chaque rail 6 comprend une pluralité d'empreintes 13 régulièrement espacées le long de celui-ci. Les empreintes 13 de deux rails 6 adjacents sont disposées les unes en regard des autres. Ces empreintes 13 sont prévues pour coopérer avec des moyens de blocage 14 des flacons 4 comme cela sera décrit ultérieurement.

On décrit à présent un flacon 4 destiné à être disposé sur le plateau 1 décrit ci-dessus. Ce flacon 4 peut présenter les mêmes caractéristiques que celles décrites dans le document WO-2006/058989.

Le flacon 4 comprend un corps 15, par exemple sensiblement cylindrique. A partir de ce corps 15 s'étend un bord inférieur 12 permettant de bloquer le flacon 4 dans les rails 6 comme mentionné plus haut. Le bord 12 entoure le corps 15 et est sensiblement cylindrique. Des réserves 16 sont cependant réalisées dans le bord 12 de sorte que le flacon présente des parties de bord sensiblement plates. Le flacon 4 ne peut ainsi être introduit que dans un seul sens entre les rails 6, la distance séparant lesdits rails au niveau du support 5 correspondant sensiblement à la distance séparant les parties de bord 12 sensiblement plates.

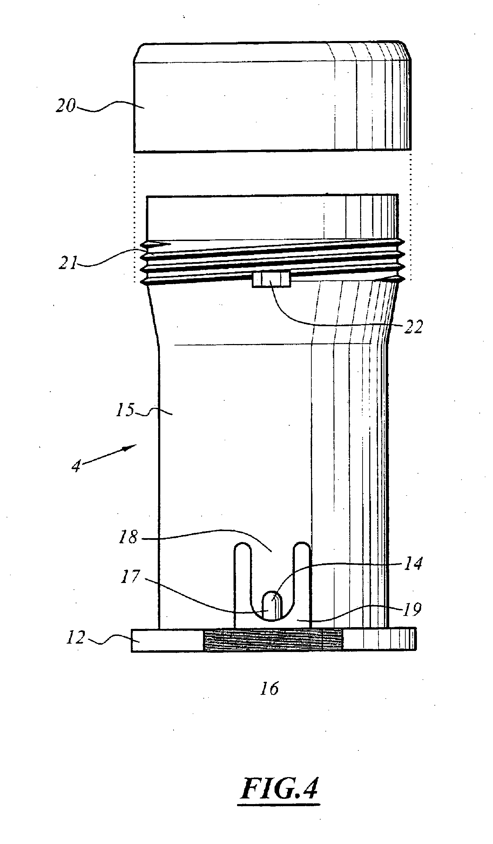

A une hauteur correspondant à celle des empreintes 13 du plateau 1, le corps 4 comprend des moyens de blocage 14 disposés au niveau des partie de bord 12 sensiblement plates, comme représenté sur la figure 4. Le flacon 4 comprend deux moyens de blocage 14 disposé chacun en regard d'un épaulement 11 d'un rail 6 lorsque le flacon 4 est disposé sur le plateau 1. Le moyen de blocage 14 comprennent une saillie 17 saillant d'une languette 18 prévue dans le corps 14. La saillie 17 est apte à s'engager dans une empreinte 13 d'un rail 6 de sorte à bloquer le flacon 4. La languette 18 est sensiblement élastique de sorte à obtenir un effet ressort permettant à la saillie 17 de s'engager dans une empreinte 13 lorsqu'elles sont en regard l'une de l'autre. Cette élasticité est par exemple obtenue par un allègement de matière 19 du corps 15 autour de la languette 18. La distance séparant chaque rail 6 au niveau des épaulements 11 correspond sensiblement au diamètre du corps d'un flacon 4, de sorte que la saillie 17 s'engage forcément dans une empreinte 13 lorsqu'elle se trouve en regard de l'une d'elle.

Le flacon 4 comprend un couvercle 20, par exemple muni d'une portion perçable et auto-cicatrisante permettant le passage d'une pipette. Le corps 15 comprend à sa partie supérieure des moyens de réception 21 du couvercle 20. Les moyens de réception sont par exemple formés par un filetage sur la partie supérieure du corps, le couvercle présentant des moyens de vissage complémentaires de ce filetage.

Les moyens de réception 21 comprennent au moins un élément de positionnement 22 du couvercle 20 de sorte à orienter celui-ci d'une manière prédéfinie. L'élément de positionnement 22 est par exemple formé par une butée saillant du filetage. Le couvercle comprend alors une contre-butée (non représentée) contre laquelle prend appui la butée lorsque le couvercle 20 est complètement vissé sur le corps 15. Selon un mode de réalisation, l'élément de positionnement 22 est disposé au niveau du moyen de blocage 14, comme représenté sur la Fig. 4.

Une telle réalisation, dans laquelle les couvercles 20 de tous les flacons 4 présents sur le plateau sont orientés selon une même direction est particulièrement avantageuse lorsque le couvercle 20 porte un marquage visuel (non représenté). En effet, le marquage est alors orienté selon une direction précise et invariable lorsque le couvercle 20 est fixé sur le corps 15, ce qui permet d'utiliser facilement des moyens de lecture à distance du marquage.

Ces moyens de lecture à distance peuvent offrir, du fait de l'orientation spécifique des flacons, une visualisation unitaire ou multiple de ces flacons dans le but de les appareiller de façon unitaire ou multiple au système d'analyse envisagé (lames d'étalement, tube de prélèvement ou d'aliquotage, puits d'analyse, ...) présentant lui-même un positionnement fixe. C'est-à-dire que les moyens de lecture permettent de lire le marquage d'un seul flacon ou plusieurs marquages à la fois. Ce positionnement fixe, qui correspond par exemple à des lames d'analyse positionnées dans une presse de décantation, se fait dans le prolongement des rails servant de support aux flacons, de sorte qu'un seul et même plateau permet le bon positionnement des flacons et des lames pour des moyens de lecture à distance offrant une visualisation unitaire ou multiple. Ainsi, un traitement groupé des flacons est possible, ce qui permet une plus grande cadence d'analyse.

## Revendications

1. Plateau de réception d'au moins un flacon (4) devant être positionné et maintenu de façon précise sur ledit plateau, ledit plateau comprenant un support (5) sur lequel le flacon (4) est destiné à être posé, au moins deux rails (6) s'étendant sensiblement parallèlement l'un par rapport à l'autre sur le support (5), lesdits rails comprenant au moins un épaulement (11) s'étendant au-dessus du support (5) vers l'autre rail (6) de sorte qu'un bord inférieur (12) du flacon (4) peut s'engager et être bloqué dans lesdites rails selon une direction longitudinale ou transversale et selon une direction d'élévation, **caractérisé en ce que** chaque rail (6) comprend au moins une empreinte (13), lesdites empreintes étant disposées l'une en regard de l'autre, chaque empreinte (13) étant agencée pour recevoir un moyen de blocage (14) prévu sur le flacon (4) de sorte que le flacon (4) peut être bloqué dans les rails (6) selon une direction longitudinale ou transversale, de sorte que le plateau garantit un positionnement exact des flacons selon les directions longitudinale et transversale du plateau et un maintien des flacons selon ces directions et selon une direction d'élévation.

2. Plateau selon la revendication 1, **caractérisé en ce qu'**il comprend une pluralité de rails (6) associés les uns aux autres de sorte à former un peigne (8), lesdits rails formant une pluralité de rangées aptes à recevoir une pluralité de flacons (4).

3. Plateau selon la revendication 2, **caractérisé en ce qu'**il comprend deux rails d'extrémité (9) comprenant chacun un épaulement (11) s'étendant vers l'autre rail d'extrémité (9) et une pluralité de rails centraux (10) comprenant chacun deux épaulements (11) s'étendant respectivement vers l'un et l'autre rails d'extrémité (9).

4. Plateau selon l'une des revendications 1 à 3, **caractérisé en ce que** chaque rail (6) comprend une pluralité d'empreintes (13) réparties le long dudit rail de sorte qu'une pluralité de flacons (4) peut être reçue dans une rangée formée par deux rails (6).

5. Flacon destiné à être utilisé avec un plateau de réception (1) selon l'une des revendications 1 à 4, ledit flacon comprenant un corps (15) à partir duquel s'étend un bord inférieur (12) formant un moyen de blocage entre deux rails (6) du plateau (1) selon une direction longitudinale ou transversale et selon une direction d'élévation, ledit flacon comprenant en outre des moyens de blocage (14) disposés de part et d'autre du corps (15) et saillants de celui-ci, lesdits moyens étant destinés à s'engager dans les empreintes (13) des rails (6) du plateau (1) de sorte à bloquer le flacon (4) selon une direction longitudinale ou transversale.

6. Flacon selon la revendication 5, **caractérisé en ce que** les moyens de blocage (14) comprennent une saillie (17) disposée sur une languette (18) prévue dans la partie inférieure du corps (15), ladite languette étant sensiblement élastique de sorte à obtenir un effet ressort permettant à la saillie (17) de s'engager dans une empreinte (13) lorsqu'elles sont en regard l'une de l'autre.

7. Flacon selon la revendication 6, **caractérisé en ce que** le corps (15) présente un allègement de matière (19) autour de la languette (18).

8. Flacon selon l'une des revendications 5 à 7, **caractérisé en ce qu'**il comprend un couvercle (20), le corps (15) comprenant à sa partie supérieure des moyens de réception (21) du couvercle (20), lesdits moyens de réception comprenant au moins un élément de positionnement (22) du couvercle (20) de sorte à orienter celui-ci d'une manière prédéfinie.

9. Flacon selon la revendication 6, **caractérisé en ce que** les moyens de réception (21) sont formés par un filetage sur la partie supérieure du corps (15), l'élément de positionnement (22) étant formé par une butée saillant du filetage, le couvercle (20) présentant des moyens de vissage complémentaires du filetage et une contre-butée contre laquelle prend appui la butée lorsque le couvercle (20) est complètement vissé sur le corps (15).

10. Flacon selon la revendication 8 ou 9, **caractérisé en ce que** le couvercle (20) porte un marquage visuel, ledit marquage étant orienté selon une direction précise et invariable lorsque le couvercle (20) est fixé sur le corps (15).

## Patentansprüche

1. Aufnahmeplatte für mindestens ein auf präzise Weise auf der Platte anzuordnendes und zu halterndes Fläschchen (4), wobei die Platte eine Auflage (5), auf der das Fläschchen (4) abgestellt werden soll, mindestens zwei Schienen (6) umfasst, die sich im Wesentlichen parallel zueinander auf der Auflage (5) erstrecken, wobei die Schienen mindestens einen Ansatz (11) umfassen, der sich oberhalb der Auflage (5) zur anderen Schiene (6) erstreckt, so dass ein unterer Rand (12) des Fläschchen (4) sich in die Schienen einpassen und darin in einer Längs- oder Querrichtung und in einer Höhenrichtung festgestellt werden kann, **dadurch gekennzeichnet, dass** jede Schiene (6) mindestens eine Einprägung (13) umfasst, wobei die Einprägungen einander gegenüberliegend angeordnet sind, wobei jede Einprägung (13) dazu eingerichtet ist, eine am Fläschchen (4) vorgesehene Feststelleinrichtung (14) aufzunehmen, so dass das Fläschchen (4) in einer Längs- oder Querrichtung in den Schienen (6) festgesetzt werden kann, so dass die Platte eine genaue Anordnung der Fläschchen in der Längs- und Querrichtung der Platte und einen Halt der Fläschchen in diesen Richtungen und in einer Höhenrichtung gewährleistet.

2. Platte nach Anspruch 1, **dadurch gekennzeichnet, dass** sie mehrere Schienen (6) umfasst, die miteinander so verbunden sind, dass sie einen Kamm (8) bilden, wobei die Schienen mehrere Reihen bilden, die mehrere Fläschchen (4) aufnehmen können.

3. Platte nach Anspruch 2, **dadurch gekennzeichnet, dass** sie zwei Endschienen (9), die jeweils einen Ansatz (11) umfassen, der sich zur anderen Endschiene (9) erstreckt, und mehrere mittlere Schienen (10) umfasst, die jeweils zwei Ansätze (11) umfassen, die sich zur einen bzw. anderen Endschiene (9) erstrecken.

4. Platte nach einem der Ansprüche 1 bis 3, **dadurch gekennzeichnet, dass** jede Schiene (6) mehrere Einprägungen (13) umfasst, die entlang der Schiene verteilt sind, so dass mehrere Fläschchen (4) in einer durch zwei Schienen (6) gebildeten Reihe aufgenommen werden können.

5. Fläschchen, das zum Gebrauch mit einer Aufnahmeplatte (1) nach einem der Ansprüche 1 bis 4 bestimmt ist, wobei das Fläschchen einen Korpus (15) umfasst, von dem aus sich ein unterer Rand (12) erstreckt, der eine Einrichtung zum Festsetzen zwischen zwei Schienen (6) der Platte (1) in einer Längs- oder Querrichtung und in einer Höhenrichtung bildet, wobei das Fläschchen darüber hinaus Festsetzungseinrichtungen (14) umfasst, die auf beiden Seiten des Korpus (15) angeordnet sind und von diesem vorstehen, wobei die Einrichtungen dazu bestimmt sind, sich in die Einprägungen (13) der Schienen (6) der Platte (1) einzupassen, so dass das Fläschchen (4) in einer Längs- oder Querrichtung festgesetzt wird.

6. Fläschchen nach Anspruch 5, **dadurch gekennzeichnet, dass** die Festsetzungseinrichtungen (14) einen Vorsprung (17) umfassen, der an einer Lasche (18) vorgesehen ist, die im unteren Teil des Korpus (15) angeordnet ist, wobei die Lasche im Wesentlichen flexibel ist, um eine Federwirkung zu erzielen, die es dem Vorsprung (17) ermöglicht, sich in eine Einprägung (13) einzupassen, wenn diese einander gegenüberliegen.

7. Fläschchen nach Anspruch 6, **dadurch gekennzeichnet, dass** der Korpus (15) eine Materialverdünnung (19) um die Lasche (18) herum umfasst.

8. Fläschchen nach einem der Ansprüche 5 bis 7, **dadurch gekennzeichnet, dass** es einen Deckel (20) umfasst, wobei der Korpus (15) in seinem oberen Teil Aufnahmeeinrichtungen (21) für den Deckel (20) umfasst, wobei die Aufnahmeeinrichtungen mindestens ein Positionierungselement (22) für den Deckel (20) umfassen, um diesen auf eine vorbestimmte Weise auszurichten.

9. Fläschchen nach Anspruch 6, **dadurch gekennzeichnet, dass** die Aufnahmeeinrichtungen (21) durch ein Gewinde am oberen Teil des Korpus (15) gebildet sind, wobei das Positionierungselement (22) durch einen vom Gewinde vorstehenden Anschlag gebildet ist, wobei der Deckel (20) zum Gewinde komplementäre Schraubeinrichtungen und einen Gegenanschlag aufweist, an dem der Anschlag anliegt, wenn der Deckel (20) vollständig auf den Korpus (15) aufgeschraubt ist.

10. Fläschchen nach Anspruch 8 oder 9, **dadurch gekennzeichnet, dass** der Deckel (20) eine Sichtmarkierung trägt, wobei die Markierung in einer genauen und unveränderlichen Richtung ausgerichtet ist, wenn der Deckel (20) am Korpus (15) fixiert ist.

## Claims

1. Tray for receiving at least one flask (4) which is to be positioned and held precisely on said tray, said tray having a support (5) on which the flask (4) is to be placed, at least two rails (6) which extend substantially parallel to one another on the support (5), said rails having at least one shoulder (11) which extends above the support (5) towards the other rail (6) so that a lower edge (12) of the flask (4) is able to fit and be immobilised between said rails in a longitudinal or transverse direction and in an elevation direction, each rail (6) having at least one indentation (13), said indentations being arranged facing one another, each indentation (13) being designed to receive an immobilisation means (14) provided on the flask (4) so that the flask (4) can be immobilised between the rails (6) in a longitudinal or transverse direction.

2. Tray according to claim 1, **characterised in that** it has a plurality of rails (6) associated with one another so as to form a comb (8), said rails forming a plurality of rows suitable for receiving a plurality of flasks (4).

3. Tray according to claim 2, **characterised in that** it has two end rails (9) each having a shoulder (11) extending towards the other end rail (9), and a plurality of central rails (10) each having two shoulders (11), each of which extends towards one of the end rails (9).

4. Tray according to any one of claims 1 to 3, **characterised in that** each rail (6) has a plurality of indentations (13) distributed along said rail so that a plurality of flasks (4) can be received in a row formed by two rails (6).

5. Flask for use with a receiving tray (1) according to any one of claims 1 to 4, said flask having a body (15) from which there extends a lower edge (12) forming a means for immobilising the flask between two rails (6) of the tray (1) in a longitudinal or transverse direction and in an elevation direction, said flask further having immobilisation means (14) which are arranged on either side of the body (15) and project therefrom, said means being intended to engage in the indentations (13) of the rails (6) of the tray (1) so as to immobilise the flask (4) in a longitudinal or transverse direction.

6. Flask according to claim 5, **characterised in that** the immobilisation means (14) comprise a projection (17) arranged on a tab (18) provided in the lower portion of the body (15), said tab being substantially resilient so as to obtain a spring effect which allows the projection (17) to engage in an indentation (13) when they are facing one another.

7. Flask according to claim 6, **characterised in that** the body (15) has an area (19) around the tab (18) from which material has been removed.

8. Flask according to any one of claims 5 to 7, **characterised in that** it has a cap (20), the body (15) having in its upper portion means (21) for receiving the cap (20), said receiving means comprising at least one element (22) for positioning the cap (20) so as to orient it in a predefined manner.

9. Flask according to claim 6, **characterised in that** the receiving means (21) are formed by a thread on the upper portion of the body (15), the positioning element (22) being formed by a stop which projects from the thread, the cap (20) having screwing means complementary to the thread and a counter-stop on which the stop abuts when the cap (20) is screwed fully onto the body (15).

10. Flask according to claim 8 or 9, **characterised in that** the cap (20) bears a visual marking, said marking being oriented in a precise and invariable direction when the cap (20) is fixed on the body (15).
